(19) Europäisches Patentamt / European Patent Office / Office européen des brevets

(11) **EP 3 595 981 B1**

(12) **FASCICULE DE BREVET EUROPEEN**

(45) Date de publication et mention
de la délivrance du brevet:
**05.05.2021 Bulletin 2021/18**

(21) Numéro de dépôt: **18710468.2**

(22) Date de dépôt: **12.03.2018**

(51) Int Cl.:
**B65D 1/16** *(2006.01)*   **B65D 79/00** *(2006.01)*

(86) Numéro de dépôt international:
**PCT/EP2018/056117**

(87) Numéro de publication internationale:
**WO 2018/166990 (20.09.2018 Gazette 2018/38)**

(54) **CORPS DE BOITE POUR LA FABRICATION D'UNE BOITE DE CONSERVE DESTINEE A RECEVOIR UN PRODUIT ALIMENTAIRE STERILISE PAR UN TRAITEMENT THERMIQUE**

DOSENKÖRPER ZUR HERSTELLUNG EINER DOSE ZUR AUFNAHME EINES DURCH WÄRMEBEHANDLUNG STERILISIERTEN LEBENSMITTELS

CAN BODY FOR PRODUCING A CAN INTENDED TO RECEIVE A FOOD PRODUCT STERILISED BY HEAT TREATMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2017 FR 1752119**

(43) Date de publication de la demande:
**22.01.2020 Bulletin 2020/04**

(73) Titulaire: **Ardagh MP Group Netherlands B.V.
7418 AH Deventer (NL)**

(72) Inventeurs:
• **LEGRESY, Jean-Marc
  72200 La Fleche (FR)**
• **JETER, Jeffrey
  Roanoke, Virginia 24019 (US)**

(74) Mandataire: **Jacobacci Coralis Harle
32, rue de l'Arcade
75008 Paris (FR)**

(56) Documents cités:
**EP-A1- 0 425 124   GB-A- 1 572 031**

**Description**

DOMAINE TECHNIQUE AUQUEL SE RAPPORTE L'INVENTION

La présente invention concerne de manière générale le domaine des corps de boîte, monoblocs et réalisés en métal, pour la fabrication d'une boîte de conserve deux pièces destinée à recevoir un produit alimentaire stérilisé par un traitement thermique après fermeture de ladite boîte de conserve.

ARRIERE-PLAN TECHNOLOGIQUE

Les boîtes de conserve sont couramment produites à partir d'un corps de boîte monobloc obtenu par emboutissage d'une tôle, dite « flan », de façon à former un fond et une paroi latérale. Un couvercle formé d'une plaque de tôle permet ensuite de fermer cette boîte. De telles boîtes sont traditionnellement appelées boîtes « deux pièces ».

Une technologie d'emboutissage communément appelée « DWI », pour « Drawn and Wall Ironing » (ou « emboutissage et étirage » ou encore « emboutissage et repassage »), permet de former des corps de boîte dont la paroi latérale est étirée.

L'épaisseur du centre du fond du corps de boîte est sensiblement égale à l'épaisseur du flanc ayant été embouti. En revanche, l'épaisseur de la paroi latérale de ce corps de boîte est réduite d'au moins 20% par rapport à l'épaisseur du centre du fond.

Cette technologie DWI permet ainsi de produire des corps de boîte dits à « paroi étirée », plus légers que les autres types de corps de boîte.

Mais de tels corps de boîtes ne sont souvent pas appropriés pour le conditionnement de produits alimentaires devant être soumis à une stérilisation par un traitement thermique après fermeture.

En effet, cette stérilisation génère une augmentation de la pression dans la boîte jusqu'à environ 3 bars. Cette augmentation de pression est plus importante encore pour les boîtes pressurisées, dans lesquelles la pression peut atteindre 5 bars.

Or, la paroi latérale se déforme très peu sous l'effet de cette pression. Seuls le fond et le couvercle sont donc susceptibles de se déformer, et de permettre l'expansion de la boîte, pour limiter l'augmentation de la pression interne durant le processus de stérilisation.

A cet effet, certains corps de boîte comportent un fond déformable du type plat, c'est-à-dire un fond comportant une pastille centrale entourée par une bande périphérique comportant au moins une moulure annulaire, elle-même entourée par une gorge périphérique en forme générale de U. Un tel corps de boîte est par exemple décrit dans le document EP-0 425 124.

Mais la plupart des fonds plats ont une déformation du type bistable, générant un effet « clic clac » (encore parfois appelé « oil can effect ») qui s'exprime, après mouvement en position déplacée, par un retour brusque de la pastille centrale en position initiale lors de la diminution de la pression interne.

Or, en pratique, cet effet « clic clac » est susceptible de poser des problèmes. En effet, par exemple, le fond peut revenir en position initiale au moment de l'ouverture de la boîte de conserve, avec le risque de projection de son contenu par l'ouverture supérieure.

OBJET DE L'INVENTION

La présente invention a pour intérêt de fournir un nouveau corps de boîte du type décrit dans EP-0 425 124 qui est particulièrement adapté pour la mise en œuvre des opérations de stérilisation.

En particulier, le corps de boîte selon l'invention comporte un fond du type plat qui, de manière inattendue, a l'intérêt de se déformer sans effet « clic clac » lors des opérations de stérilisation.

Le fond en question ne risque ainsi pas de revenir brusquement en position initiale lors de la réduction de la pression interne.

A cet effet, la présente invention propose un corps de boîte, monobloc et réalisé en métal, pour la fabrication d'une boîte de conserve deux pièces destinée à recevoir un produit alimentaire stérilisé par un traitement thermique après fermeture de ladite boîte de conserve.

Le corps de boîte comporte une paroi latérale dont une bordure inférieure est raccordée à un fond, lequel fond comporte une épaisseur maximale inférieure à 0,4 mm, l'épaisseur minimale de ladite paroi latérale étant comprise entre 30% et 60% de ladite épaisseur maximale dudit fond.

La paroi latérale, de forme générale tubulaire cylindrique, comporte une surface intérieure dont le diamètre Db est supérieur à 70 mm.

Le fond comporte :

- une pastille centrale circulaire, dont le bord présente un diamètre Dp,
- une bande périphérique annulaire comportant au moins une moulure annulaire, qui entoure ladite pastille centrale et qui est agencée de manière concentrique avec ledit fond, et
- une gorge périphérique en forme générale de U, raccordée avec ladite bordure inférieure de la paroi latérale et s'ouvrant vers l'intérieur dudit corps de boîte.

La gorge périphérique comporte une surface extérieure dont une ligne d'embase s'inscrit dans un cercle ayant un diamètre Df.

Et selon l'invention, le corps de boîte comporte les deux ratios dimensionnels suivants :

a) un premier ratio dimensionnel R1, dans lequel

$$R1 = Dp / Db$$

avec R1 étant inférieur, ou égal, à 0,5
et
b) un second ratio dimensionnel R2, dans lequel

$$R2 = Dp / Df$$

avec R2 étant inférieur, ou égal, à 0,55.

D'autres caractéristiques non limitatives et avantageuses du corps de boîte conforme à l'invention, prises individuellement ou selon toutes les combinaisons techniquement possibles, sont les suivantes :

- le premier ratio dimensionnel R1 (Dp/ Db) est inférieur, ou égal, à 0,45, de préférence encore allant de 0,40 à 0,44 ; et le second ratio dimensionnel R2 (Dp / Df) est inférieur, ou égal, à 0,5, de préférence encore allant de 0,42 à 0,46 ;
- ladite pastille centrale a une épaisseur allant de 0,2 à 0,4 mm, de préférence allant de 0,22 à 0,37 mm ;
- la pastille centrale présente une flèche (dont la convexité est orientée vers l'extérieur) qui correspond à la distance entre deux plans parallèles passant respectivement par son bord et par son centre, laquelle flèche a une valeur inférieure, ou égale, à 1 mm ;
- ladite au moins une moulure a une profondeur F allant de 0,5 à 3 mm, de préférence de 0,7 à 1,4 mm ;
- la paroi latérale a un diamètre Db supérieur à 80 mm, avantageusement encore compris entre 80 et 85 mm ; de préférence, la paroi latérale a un diamètre Db de 83 mm, la pastille centrale a un diamètre Dp compris entre 34 et 35 mm, et la ligne d'embase de la gorge périphérique s'inscrit dans un cercle ayant un diamètre Df compris entre 78 et 79 mm ;
- la bande périphérique annulaire comporte deux moulures annulaires ;
- la bande périphérique annulaire comporte une moulure annulaire qui entoure la pastille centrale, et une couronne intercalaire ménagée entre ladite moulure annulaire et la gorge périphérique.

La présente invention concerne encore une boîte de conserve deux pièces, destinée à recevoir un produit alimentaire stérilisé par un traitement thermique après fermeture de ladite boîte de conserve, laquelle boîte de conserve comprend :

- un corps de boîte selon l'invention, et
- un couvercle assemblé avec la paroi latérale dudit corps de boîte pour fermer ce dernier.

L'invention concerne également le procédé pour la fabrication d'un corps de boîte selon l'invention, obtenu par une technique d'emboutissage et étirage de parois (DWI).

L'invention porte également sur un procédé pour le conditionnement et la stérilisation d'un produit alimentaire dans une boîte de conserve deux pièces.

Ce procédé comprend :

- une étape de fourniture d'un corps de boîte selon l'invention,
- une étape de remplissage dudit corps de boîte,
- une étape de fermeture dudit corps de boîte avec un couvercle, pour la fabrication d'une boîte de conserve deux pièces, et
- une étape de stérilisation dudit produit alimentaire rapporté dans ledit corps de boîte par un traitement thermique.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une section, schématique et selon un plan de coupe longitudinal, d'une boîte de conserve deux pièces selon l'invention ;
- la figure 2 est une vue partielle et agrandie de la boîte de conserve selon la figure 1, montrant schématiquement une coupe du fond du corps de boîte ;
- la figure 3 est une vue partielle et agrandie du fond du corps de boîte selon la figure 2, montrant schématiquement la section de sa bande périphérique annulaire ;
- la figure 4 est une vue partielle et agrandie d'une variante de réalisation pour la boîte de conserve selon la figure 1, montrant schématiquement une coupe de son fond de corps de boîte.

Boîte de conserve et corps de boîte

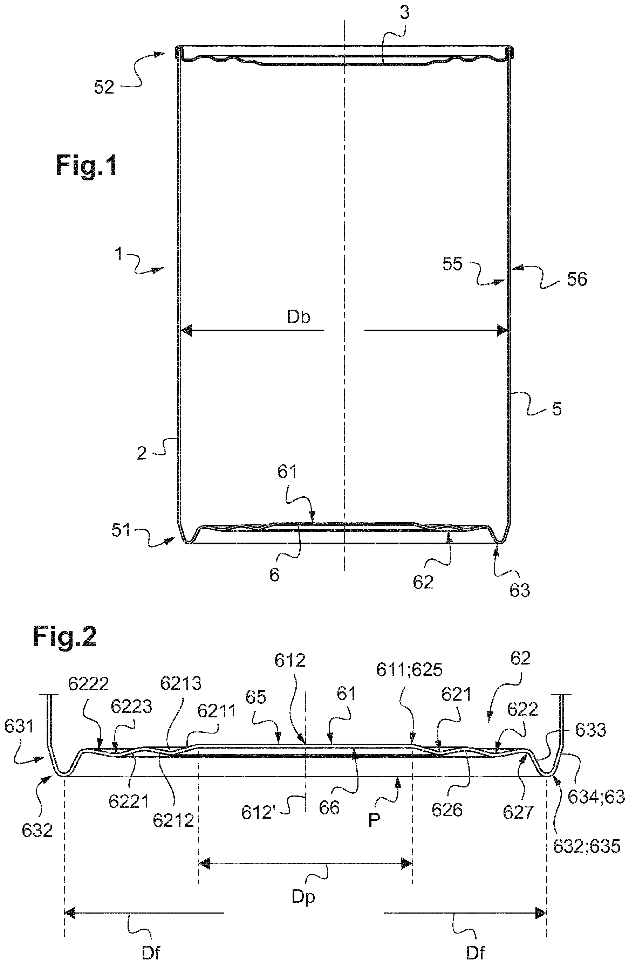

Sur la figure 1, on a représenté une boîte de conserve 1 destinée à recevoir un produit alimentaire.

Cette boîte de conserve 1, fermée hermétiquement, est adaptée à la stérilisation de son contenu par un traitement thermique. En effet, tel que développé par la suite, cette boîte de conserve 1 comporte un fond déformable du type plat qui, lors des opérations de stérilisation, a l'intérêt de se déformer sans effet « clic clac ».

La boîte de conserve 1 est du genre deux pièces : un corps de boîte 2 et un couvercle 3, assemblés l'un avec l'autre de manière hermétique.

Le corps de boîte 2 est monobloc, réalisé en métal (par exemple acier ou aluminium).

Le corps de boîte 2 est avantageusement obtenu par une technique d'emboutissage et étirage de parois, connue encore sous le nom de DWI pour « Drawn and Wall Ironing ». Le corps de boîte 2 est alors avantageusement obtenu par emboutissage d'une tôle, dite « flan », de façon à former un fond et une paroi latérale.

Ce corps de boîte 2 comporte ainsi deux principales parties : une paroi latérale 5 et un fond 6.

La paroi latérale 5, étirée, est de forme générale tubulaire cylindrique.

Cette paroi latérale 5 est délimitée par une bordure inférieure 51 et par une bordure supérieure 52 (libre avant le positionnement du couvercle 3).

Cette paroi latérale 5 comporte encore deux surfaces opposées : une surface intérieure 55 (destinée à venir en contact avec le produit conditionné) et une surface extérieure 56. La distance entre ces deux surfaces opposées 55, 56 définit l'épaisseur de la paroi latérale 5.

En outre, la surface intérieure 55 de cette paroi latérale 5 définit un diamètre Db (figure 1).

Ce diamètre Db est supérieur à 70 mm, voire supérieur à 75 mm. Par exemple, ce diamètre est compris dans le domaine allant de 83 mm à 99 mm.

Des moulures peuvent être formées sur cette paroi latérale 5 de façon à augmenter sa résistance à la pression externe.

Le fond 6 est raccordé, de manière monobloc, à la bordure inférieure 51 de la paroi latérale 5.

Tel que décrit plus en détails ci-dessous en relation avec la figure 2, le fond 6 est du genre « fond plat » avec :

- une pastille centrale 61, circulaire, délimitée par un bord 611 circulaire présentant un diamètre Dp,
- une bande périphérique annulaire 62 comportant au moins une moulure annulaire 621, 622 qui entoure cette pastille centrale 61 et qui est agencée de manière concentrique avec le fond 6, et
- une gorge périphérique 63, en forme générale de U, raccordée de manière monobloc avec la bordure inférieure 51 de la paroi latérale 5 et s'ouvrant vers l'intérieur du corps de boîte 2.

Le fond 6 comporte également deux surfaces opposées : une surface intérieure 65 (destinée à venir en contact avec le produit) et une surface extérieure 66. Ces deux surfaces opposées 65, 66 définissent l'épaisseur de ce fond 6.

La gorge périphérique 63 comporte une surface extérieure 631 dont une ligne d'embase 632 (ou pied annulaire) s'inscrit dans un cercle (virtuel) ayant un diamètre Df.

La gorge périphérique 63 présente encore :

- une première paroi 633, intérieure, liée à la bande annulaire 62, et
- une seconde paroi 634, extérieure, liée à la paroi latérale 5.

Ces deux parois 633, 634 sont reliées par une ligne de jonction 635, formant la ligne d'embase 632 et à section en arc de cercle ayant par exemple un rayon extérieur compris entre 0,4 mm et 1,6 mm.

La pastille centrale circulaire 61 et la bande périphérique annulaire 62 sont déportées par rapport au plan général P passant par la ligne d'embase 632 de la gorge périphérique 63, vers l'intérieur du corps de boîte 2.

Par exemple, la pastille centrale circulaire 61 est déportée d'une distance comprise entre 2 et 5 mm par rapport au plan général P passant par la ligne d'embase 632.

Pour prévenir le phénomène « clic clac », le corps de boîte 2 comporte deux ratios dimensionnels particuliers.

D'une part, un premier ratio dimensionnel R1 est défini par la formule suivante :

$$R1 = Dp / Db$$

dans laquelle Dp est le diamètre du bord 611 de la pastille centrale 61,

Db est le diamètre de la surface intérieure 55 de la paroi latérale 5 du corps de boîte 2, avec R1 étant inférieur, ou égal, à 0,5.

D'autre part, un second ratio dimensionnel R2 est défini par la formule suivante :

$$R2 = Dp / Df$$

dans laquelle Dp est le diamètre du bord 611 de la pastille centrale 61,

Df est le diamètre de la ligne d'embase 632 de la gorge périphérique 63, avec R2 étant inférieur, ou égal, à 0,55.

Selon un mode de réalisation préféré, le corps de boîte 2 comporte les deux ratios dimensionnels suivants :

- le premier ratio dimensionnel R1 (Dp / Db) est inférieur, ou égal, à 0,45, de préférence encore allant de 0,40 à 0,44, et
- le second ratio dimensionnel R2 (Dp / Df) est inférieur, ou égal, à 0,5, de préférence encore allant de 0,42 à 0,46.

Encore selon un mode de réalisation préféré, la paroi latérale 5 a un diamètre Db supérieur à 80 mm, de préférence encore compris entre 80 et 85 mm.

Dans ce mode de réalisation préféré, le corps de boîte 2 comporte avantageusement les caractéristiques techniques suivantes :

- la paroi latérale 5 a un diamètre Db de 83 mm,
- la pastille centrale 61 a un diamètre Dp compris entre 34 et 35 mm, et

- la ligne d'embase 632 de la gorge périphérique 63 s'inscrit dans un cercle ayant un diamètre Df compris entre 78 et 79 mm.

Par ailleurs, le corps de boîte 2 comporte d'autres caractéristiques structurelles susceptibles de participer à la prévention du phénomène « clic clac ».

La pastille centrale 61 présente éventuellement une flèche, c'est-à-dire une forme convexe orientée vers l'extérieur.

Cette flèche est définie par la distance entre deux plans parallèles passant respectivement par son bord 611 et par son centre 612 (par lequel passe un axe longitudinal 612').

La flèche en question a avantageusement une valeur inférieure, ou égale, à 1 mm.

La bande périphérique annulaire 62 comporte avantageusement une ou plusieurs moulures annulaires 621, 622.

De manière générale, par « moulure annulaire », on entend une gorge ou une ondulation dont la concavité s'ouvre vers l'intérieur. Chaque moulure annulaire 621, 622 s'étend ici en saillie sous le plan général passant par la pastille centrale 61.

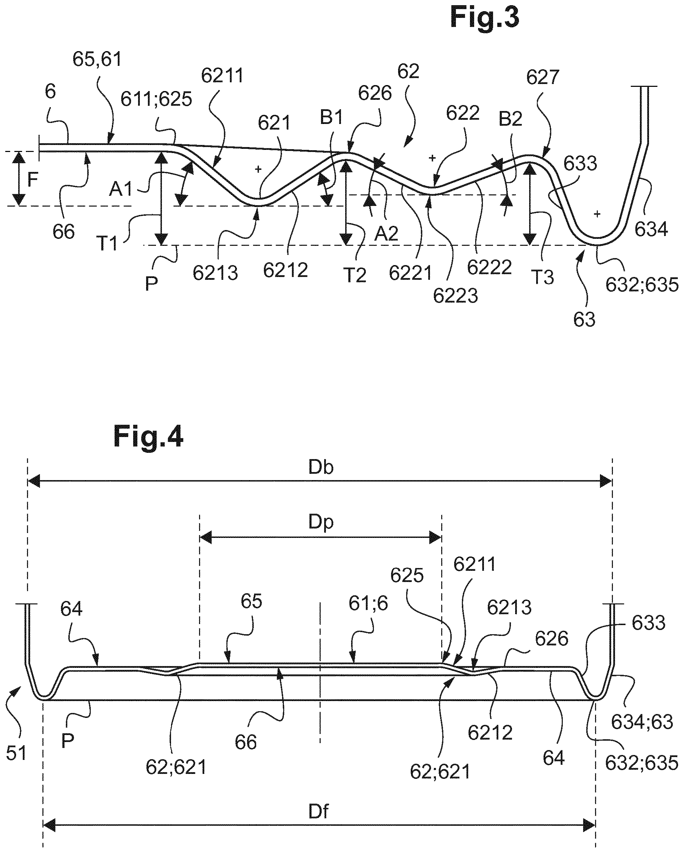

Chaque moulure annulaire 621, 622 a avantageusement une profondeur F̲ allant de 0,5 à 3 mm, de préférence de 0,7 à 1,4 mm (figure 3).

En d'autres termes, la surface inférieure de chaque moulure annulaire 621, 622 est déportée d'une distance comprise entre 1,5 et 4,5 mm par rapport au plan général P passant par la ligne d'embase 632 (figure 3).

Selon les figures 1 à 3, la bande périphérique annulaire 62 comporte deux moulures annulaires : une moulure annulaire intérieure 621 (du côté de la pastille centrale 61) et une moulure annulaire extérieure 622 (à distance de la pastille centrale 61).

Chaque moulure annulaire 621, 622 comporte ici deux surfaces tronconiques :

- une surface tronconique intérieure 6211, 6221 (du côté de la pastille centrale 61), dont le sommet virtuel se situe en regard de la surface supérieure 65 du fond 6 et avantageusement centré sur l'axe longitudinal 612', et
- une surface tronconique extérieure 6212, 6222 (à distance de la pastille centrale 61), dont le sommet virtuel se situe en regard de la surface inférieure 66 du fond 6 et avantageusement centré sur l'axe longitudinal 612'.

Chaque surface tronconique 6211, 6212 et 6221, 6222 d'une moulure annulaire 621, 622 définit un angle compris entre 3° et 40° par rapport à un plan s'étendant parallèlement au plan général P passant par la ligne d'embase 632.

De manière avantageuse, dans chaque moulure annulaire 621, 622, l'angle A1, A2 formé par la surface tronconique intérieure 6211, 6221 est supérieur à l'angle B1, B2 formé par la surface tronconique extérieure 6212, 6222 associée (figure 3).

Les deux surfaces tronconiques 6211, 6212 et 6221, 6222 d'un moulure annulaire 621, 622 sont reliées par une ligne de jonction 6213, 6223 (médiane) à section arrondie dont le rayon est par exemple compris entre 1 et 2 mm (par exemple de 1,5 mm).

Chaque moulure annulaire 621, 622 est encore délimitée par deux lignes de jonction, à savoir :

- une ligne de jonction intérieure 625, ménagée entre la pastille centrale 61 et la moulure annulaire intérieure 621, formant le bord 611 de la pastille centrale 61,
- une ligne de jonction intercalaire 626, ménagée entre les deux moulures annulaires 621, 622, et
- une ligne de jonction extérieure 627, ménagée entre la moulure annulaire extérieure 622 et la gorge périphérique 63.

Chacune de ces lignes de jonction 625, 626, 627 a une section arrondie dont le rayon est par exemple compris entre 1 et 2 mm (par exemple de 1,5 mm).

En l'espèce, les lignes de jonction 625, 626 et 627 sont déportées d'une distance T1, T2 et T3, respectivement, qui décroît successivement de l'intérieur vers l'extérieur, par rapport au plan général P passant par la ligne d'embase 632 (figure 3).

Ces lignes de jonction 625, 626 et 627 s'inscrivent avantageusement, au moins approximativement, dans une surface tronconique virtuelle dont le sommet virtuel se situe en regard de la surface supérieure 65 du fond 6.

Par « profondeur » d'une moulure annulaire, on entend avantageusement la cote F, mesurée parallèlement à l'axe longitudinal 612', définie entre, d'une part, ses deux lignes de jonction 625, 626 ou 626, 627 (le cas échéant sa ligne de jonction la plus éloignée du plan général P passant par la ligne d'embase 632) et, d'autre part, sa ligne de jonction 6213, 6223 médiane.

Selon une variante de réalisation représentée sur la figure 4, la bande périphérique annulaire 62 comporte une seule moulure annulaire, qui entoure la pastille centrale 61 et qui est agencée de manière concentrique avec le fond 6.

Cette moulure annulaire unique selon la figure 4 est identique, ou au moins similaire, à la moulure annulaire intérieure 621 selon les figures 1 à 3. Dans un souci de simplification, les repères utilisés pour décrire la moulure annulaire intérieure 621 seront utilisés pour décrire cette moulure annulaire unique.

Ainsi, là encore, cette moulure annulaire unique 621 comporte ici deux surfaces tronconiques :

- une surface tronconique intérieure 6211 (du côté de la pastille centrale 61), dont le sommet virtuel se situe en regard de la surface supérieure 65 du fond 6, et
- une surface tronconique extérieure 6212 (à distance de la pastille centrale 61), dont le sommet virtuel se situe en regard de la surface inférieure 66 du fond 6.

Chaque surface tronconique 6211, 6212 de cette moulure annulaire 621 définit un angle compris entre 3° et 40° par rapport à un plan s'étendant parallèlement au plan général P passant par la ligne d'embase 632.

Là encore, l'angle formé par la surface tronconique intérieure 6211 est supérieur à l'angle formé par la surface tronconique extérieure 6212.

Les deux surfaces tronconiques 6211, 6212 sont reliées par une ligne de jonction 6213 à section arrondie dont le rayon est par exemple compris entre 1 et 2 mm (par exemple de 1,5 mm).

Cette moulure annulaire unique est encore délimitée par deux lignes de jonction, à savoir :

- une ligne de jonction intérieure 625, ménagée entre la pastille centrale 61 et la moulure annulaire unique 621, et
- une ligne de jonction extérieure 626, ménagée entre la moulure annulaire unique 621 et la gorge périphérique 63.

En l'espèce, la ligne de jonction extérieure 626 est raccordée à la gorge périphérique 63 par le biais d'une couronne intercalaire 64 s'étendant parallèlement au plan général P passant par la ligne d'embase 632.

En d'autres termes, la bande périphérique annulaire 62 comporte :

- une moulure annulaire 621, qui entoure la pastille centrale 61, et
- une couronne intercalaire 64, ménagée entre ladite moulure annulaire 621 et la gorge périphérique 63.

Par ailleurs, de manière générale, le fond 6 comporte une épaisseur maximale $e1$ inférieure à 0,4 mm.

En particulier, la pastille centrale 61 a avantageusement une épaisseur allant de 0,2 à 0,4 mm, de préférence allant de 0,22 à 0,37 mm.

De son côté, l'épaisseur minimale e2 de la paroi latérale 5 est avantageusement comprise entre 30% et 60% de l'épaisseur maximale $e1$ du fond 6.

Par exemple, le corps de boîte 2 comporte les épaisseurs suivantes :

- une épaisseur maximale $e1$ du fond 6 comprise entre 0,29 et 0,32 mm, et
- une épaisseur minimale $e2$ de la paroi latérale 5 comprise entre 0,155 et 0,175 mm.

Toujours de manière générale, la hauteur de la paroi latérale 5 du corps de boîte 2 (correspondant approximativement à la hauteur de la boîte de conserve 1) est avantageusement comprise entre 1,5 et 3 fois sa largeur (par exemple entre 1,7 et 2).

Le couvercle 3 est assemblé avec la paroi latérale 5 du corps de boîte 2, et en particulier avec sa bordure supérieure 52, pour assurer sa fermeture.

Le couvercle 3, de manière classique en soi, peut être réalisé en métal.

Il peut comporter des moyens permettant son ouverture facile, par exemple une portion déchirable qui est délimitée par une ligne d'amorce de rupture et qui est équipée d'un anneau de traction pour assurer sa séparation par rapport au reste du couvercle.

Procédé de conditionnement et de stérilisation

La présente invention concerne également le procédé pour le conditionnement et la stérilisation d'un produit alimentaire dans une boîte de conserve deux pièces.

En effet, la boîte de conserve selon l'invention peut être fabriquée avec une quantité de matière optimisée, et peut subir un traitement thermique de stérilisation sans dommage (notamment au niveau de son fond 6).

Ce procédé comprend :

- une étape de fourniture d'un corps de boîte 2 tel que décrit ci-dessus en relation avec la figure 1, par exemple sous la forme d'une étape de fabrication par une technologie DWI,
- une étape de remplissage du corps de boîte 2 avec le produit alimentaire à conditionner,
- une étape de fermeture dudit corps de boîte 2 avec un couvercle 3, pour la fabrication de la boîte de conserve 1 deux pièces (figure 1), et
- une étape de stérilisation du produit alimentaire rapporté dans ledit corps de boîte 2 par un traitement thermique.

Lors de l'étape de fermeture, le couvercle 3 est rapporté sur la bordure supérieure 52 de la paroi latérale 5 du corps de boîte 2 pour obtenir la boîte de conserve.

Cette solidarisation du couvercle 3 sur le corps de boîte 2 est par exemple réalisée par une technique de sertissage.

Par ailleurs, l'étape de stérilisation implique avantageusement un chauffage du contenu de la boîte à une température d'environ 110°C à 150°C (de préférence entre 110 et 135°C).

Ainsi, lorsque la boîte de conserve 1 est chauffée, l'augmentation de sa pression interne entraîne la déformation, temporaire et réversible, de son fond 6 : le fond 6 est déplacé vers le plan général P passant par la ligne d'embase 632 de la gorge périphérique 63.

La distance du déplacement de la pastille centrale 61 en position déformée, depuis la position initiale, est par exemple de 4 mm sous pression de 1,2 bar.

Cette augmentation de volume permet de limiter la pression effective dans la boîte de conserve 1, tout en conservant des valeurs ne risquant pas de l'endommager.

La structure du fond 6 a l'intérêt de permettre ce déplacement sans effet « clic clac ». Ainsi, il n'y a pas de risque que le fond 6 revienne brutalement dans sa position initiale, par exemple au moment de l'ouverture de la boîte.

## Revendications

1. Corps de boîte, monobloc et réalisé en métal, pour la fabrication d'une boîte de conserve deux pièces destinée à recevoir un produit alimentaire stérilisé par un traitement thermique après fermeture de ladite boîte de conserve, lequel corps de boîte (2) comporte une paroi latérale (5) dont une bordure inférieure (51) est raccordée à un fond (6), lequel fond (6) comporte une épaisseur maximale (e1) inférieure à 0,4 mm, l'épaisseur minimale (e2) de ladite paroi latérale (5) étant comprise entre 30% et 60% de ladite épaisseur maximale (e1) dudit fond (6), laquelle paroi latérale (5), de forme générale tubulaire cylindrique, comporte une surface intérieure (55) dont le diamètre Db est supérieur à 70 mm, lequel fond (6) comporte :

   - une pastille centrale (61), circulaire, dont le bord (611) présente un diamètre Dp,
   - une bande périphérique (62), annulaire, comportant au moins une moulure annulaire (621, 622), qui entoure ladite pastille centrale (61) et qui est agencée de manière concentrique avec ledit fond (6), et
   - une gorge périphérique (63) en forme générale de U, raccordée avec ladite bordure inférieure (51) de la paroi latérale (5) et s'ouvrant vers l'intérieur dudit corps de boîte (2),

   laquelle gorge périphérique (63) comporte une surface extérieure (631) dont une ligne d'embase (632) s'inscrit dans un cercle ayant un diamètre Df, **caractérisé en ce que** ledit corps de boîte (2) comporte les deux ratios dimensionnels suivants :

   a) un premier ratio dimensionnel R1, dans lequel

$$R1 = Dp / Db$$

   avec R1 étant inférieur, ou égal, à 0,5 et
   b) un second ratio dimensionnel R2, dans lequel

$$R2 = Dp / Df$$

   avec R2 étant inférieur, ou égal, à 0,55.

2. Corps de boîte métallique, selon la revendication 1, **caractérisé en ce que** :

   - le premier ratio dimensionnel R1 (Dp / Db) est inférieur, ou égal, à 0,45, de préférence encore allant de 0,40 à 0,44, et
   - le second ratio dimensionnel R2 (Dp / Df) est inférieur, ou égal, à 0,5, de préférence encore allant de 0,42 à 0,46.

3. Corps de boîte métallique, selon l'une quelconque des revendications 1 ou 2, **caractérisé en ce que** ladite pastille centrale (61) a une épaisseur allant de 0,2 à 0,4 mm, de préférence allant de 0,22 à 0,37 mm.

4. Corps de boîte métallique, selon l'une quelconque des revendications 1 à 3, **caractérisé en ce que** la pastille centrale (61) présente une flèche qui correspond à la distance entre deux plans parallèles passant respectivement par son bord (611) et par son centre (612), laquelle flèche a une valeur inférieure, ou égale, à 1 mm.

5. Corps de boîte métallique, selon l'une quelconque des revendications 1 à 4, **caractérisé en ce que** ladite au moins une moulure (621, 622) a une profondeur F allant de 0,5 à 3 mm, de préférence de 0,7 à 1,4 mm.

6. Corps de boîte métallique, selon l'une quelconque des revendications 1 à 5, **caractérisé en ce que** la paroi latérale (5) a un diamètre Db supérieur à 80 mm, de préférence encore compris entre 80 et 85 mm.

7. Corps de boîte métallique, selon la revendication 6, **caractérisé en ce que** :

   - la paroi latérale (5) a un diamètre Db de 83 mm,
   - la pastille centrale (61) a un diamètre Dp compris entre 34 et 35 mm, et
   - la ligne d'embase (632) de la gorge périphérique (63) s'inscrit dans un cercle ayant un diamètre Df compris entre 78 et 79 mm.

8. Corps de boîte métallique, selon l'une quelconque des revendications 1 à 7, **caractérisé en ce que** la bande périphérique annulaire (62) comporte deux moulures annulaires (621, 622).

9. Corps de boîte métallique, selon l'une quelconque des revendications 1 à 7, **caractérisé en ce que** la bande périphérique annulaire (62) comporte :

   - une moulure annulaire (621), qui entoure la pastille centrale (61), et
   - une couronne intercalaire (64), ménagée entre ladite moulure annulaire (621) et la gorge périphérique (63).

10. Boîte de conserve deux pièces, destinée à recevoir un produit alimentaire stérilisé par un traitement thermique après fermeture de ladite boîte de conserve, laquelle boîte de conserve (1) comprend :

    - un corps de boîte (2) selon l'une quelconque des revendications 1 à 9, et
    - un couvercle (3) assemblé avec la paroi latérale (5) dudit corps de boîte (2) pour fermer ce dernier.

11. Procédé pour la fabrication d'un corps de boîte (2) selon l'une quelconque des revendications 1 à 9, **caractérisé en ce qu'**il est obtenu par une technique d'emboutissage et étirage de parois (DWI).

12. Procédé pour le conditionnement et la stérilisation d'un produit alimentaire dans une boîte de conserve (1) deux pièces, lequel procédé est **caractérisé en ce qu'**il comprend :

    - une étape de fourniture d'un corps de boîte (2) selon l'une quelconque des revendications 1 à 9,
    - une étape de remplissage dudit corps de boîte (2),
    - une étape de fermeture dudit corps de boîte (2) avec un couvercle (3), pour la fabrication d'une boîte de conserve (1) deux pièces, et
    - une étape de stérilisation dudit produit alimentaire rapporté dans ledit corps de boîte (2) par un traitement thermique.

## Patentansprüche

1. Einteiliger und aus Metall hergestellter Dosenkörper zur Herstellung einer zweiteiligen Konservendose, die zur Aufnahme eines nach dem Schließen der Konservendose durch eine Wärmebehandlung sterilisierten Lebensmittels bestimmt ist, wobei der Dosenkörper (2) eine Seitenwand (5) aufweist, von der ein unterer Rand (51) mit einem Boden (6) verbunden ist, wobei der Boden (6) eine maximale Dicke (e1) von weniger als 0,4 mm aufweist, wobei die minimale Dicke (e2) der Seitenwand (5) zwischen 30% und 60% der maximalen Dicke (e1) des Bodens (6) beträgt, wobei die Seitenwand (5) von im Wesentlichen rohrförmiger zylindrischer Form eine innere Oberfläche (55) aufweist, deren Durchmesser Db größer als 70 mm ist, wobei der Boden (6)

    - eine zentrale kreisförmige Platte (61), deren Rand (611) einen Durchmesser Dp aufweist,

    - ein ringförmiges Umfangsband (62), mit wenigstens einem ringförmigen Formteil (621, 622), das die zentrale Platte (61) umrandet und das zum Boden (6) konzentrisch angeordnet ist, und
    - eine umlaufende, im Wesentlichen U-förmige Kehle (63), die mit dem unteren Rand (51) der Seitenwand (5) verbunden ist und zum Inneren des Dosenkörpers (2) hin geöffnet ist,

aufweist,
wobei die umlaufende Kehle (63) eine äußere Oberfläche (631) aufweist, von der eine Grundlinie (632) in einem Kreis mit einem Durchmesser Df eingeschrieben ist,
**dadurch gekennzeichnet, daß** der Dosenkörper (2) die beiden folgenden Abmessungsverhältnisse aufweist:

    a) ein erstes Abmessungsverhältnis R1, bei dem

$$R1 = Dp \, / \, Db$$

    mit R1 kleiner als oder gleich 0,5 ist, und
    b) ein zweites Abmessungsverhältnis R2, bei dem

$$R2 = Dp \, / \, Df$$

    mit R2 kleiner als oder gleich 0,55 ist.

2. Metallener Dosenkörper gemäß Anspruch 1, **dadurch gekennzeichnet, daß**

    - das erste Abmessungsverhältnis R1 (Dp / Db) kleiner als oder gleich 0,45 ist, vorzugsweise noch 0,40 bis 0,44 beträgt, und
    - das zweite Abmessungsverhältnis R2 (Dp / Df) kleiner als oder gleich 0,5 ist, vorzugsweise noch 0,42 bis 0,46 beträgt.

3. Metallener Dosenkörper gemäß einem der Ansprüche 1 oder 2, **dadurch gekennzeichnet, daß** die zentrale Platte (61) eine Dicke aufweist, die 0,2 bis 0,4 mm, vorzugsweise 0,22 bis 0,37 mm, beträgt.

4. Metallener Dosenkörper gemäß einem der Ansprüche 1 bis 3, **dadurch gekennzeichnet, daß** die zentrale Platte (61) eine Abknickung aufweist, die dem Abstand zwischen zwei parallelen Ebenen entspricht, die durch deren Rand (611) bzw. durch deren Mitte (612) gehen, wobei die Abknickung einen Wert von kleiner als oder gleich 1 mm aufweist.

**5.** Metallener Dosenkörper gemäß einem der Ansprüche 1 bis 4, **dadurch gekennzeichnet, daß** das wenigstens eine Formteil (621, 622) eine Tiefe F aufweist, die 0,5 bis 3 mm, vorzugsweise 0,7 bis 1,4 mm beträgt.

**6.** Metallener Dosenkörper gemäß einem der Ansprüche 1 bis 5, **dadurch gekennzeichnet, daß** die Seitenwand (5) einen Durchmesser Db von mehr als 80 mm, vorzugsweise zwischen 80 und 85 mm aufweist.

**7.** Metallener Dosenkörper gemäß Anspruch 6, **dadurch gekennzeichnet, daß**.

- die Seitenwand (5) einen Durchmesser Db von 83 mm aufweist,
- die zentrale Platte (61) einen Durchmesser Dp zwischen 34 und 35 mm aufweist und
- die Grundlinie (632) der umlaufenden Kehle (63) in einem Kreis mit einem Durchmesser Df zwischen 78 und 79 mm eingeschrieben ist.

**8.** Metallener Dosenkörper gemäß einem der Ansprüche 1 bis 7, **dadurch gekennzeichnet, daß** das ringförmige umlaufende Band (62) zwei ringförmige Formteile (621, 622) aufweist.

**9.** Metallener Dosenkörper gemäß einem der Ansprüche 1 bis 7, **dadurch gekennzeichnet, daß** das ringförmige umlaufende Band (62)

- ein ringförmiges Formteil (621), das die zentrale Platte (61) umgibt, und
- einen zwischen dem ringförmigen Formteil (621) und der umlaufenden Kehle (63) angeordneten Zwischenkranz (64)

aufweist.

**10.** Zweiteilige Konservendose, die dazu bestimmt ist, ein nach dem Schließen der Konservendose durch eine Wärmebehandlung sterilisiertes Lebensmittel aufzunehmen, wobei die Konservendose (1)

- einen Dosenkörper (2) gemäß einem der Ansprüche 1 bis 9 und
- einen Deckel (3), der mit der Seitenwand (5) des Dosenkörpers (2) zusammengesetzt ist, um letzteren zu verschließen,

aufweist.

**11.** Verfahren zur Herstellung eines Dosenkörpers (2) gemäß einem der Ansprüche 1 bis 9, **dadurch gekennzeichnet, daß** er mittels der Technik des Stanzens und Streckens von Wandungen (DWI) erhalten wird.

**12.** Verfahren zum Abfüllen und Sterilisieren eines Lebensmittels in einer zweiteiligen Konservendose (1), wobei das Verfahren **dadurch gekennzeichnet ist, daß** es

- einen Schritt des Bereitstellens eines Dosenkörpers gemäß einem der Ansprüche 1 bis 9,
- einen Schritt des Befüllens des Dosenkörpers (2),
- einen Schritt des Schließens des Dosenkörpers (2) mit einem Deckel (3) zum Herstellen einer zweiteiligen Konservendose (1) und
- einen Schritt des Sterilisierens des in den Dosenkörper (2) eingebrachten Lebensmittels durch eine Wärmebehandlung

aufweist.

**Claims**

**1.** A one-piece can body made of metal, for producing a two-piece can intended to receive a food product sterilized by heat treatment after closure of said can, wherein said can body (2) has a lateral wall (5), a lower edge (51) of which is connected to a bottom (6), wherein said bottom (6) has a maximum thickness (e1) lower than 0.4 mm, the minimum thickness (e2) of said lateral wall (5) being comprised between 30 % and 60 % of said maximum thickness (e1) of said bottom (6), wherein said lateral wall (5), of generally cylindrical tubular shape, has an inner surface (55) whose diameter Db is higher than 70 mm, wherein said bottom (6) includes:

- a central circular plate (61), whose edge (611) has a diameter Dp,
- an annular peripheral strip (62) including at least one annular moulding (621, 622), which surrounds said central plate (61) and which is arranged concentrically with said bottom (6), and
- a generally U-shaped peripheral groove (63), connected to said lower edge (51) of the lateral wall (5) and opening towards the inside of said can body (2),

wherein said peripheral groove (63) has an outer surface (631), a base line (632) of which is inscribed into a circle of diameter Df, **characterized in that** said can body (2) has the following two dimensional ratios:

a) a first dimensional ratio R1, wherein

$$R1 = Dp / Db$$

with R1 lower than or equal to 0.5 and

b) a second dimensional ratio R2, wherein

$$R2 = Dp / Df$$

with R2 lower than or equal to 0.55.

2. The metal can body according to claim 1, **characterized in that**:

   - the first dimensional ratio R1 (Dp / Db) is lower than or equal to 0.45, preferably from 0.40 to 0.44, and
   - the second dimensional ratio R2 (Dp / Df) is lower than or equal to 0.5, preferably from 0.42 to 0.46.

3. The metal can body according to any one of claims 1 or 2, **characterized in that** said central plate (61) has a thickness from 0.2 to 0.4 mm, preferably from 0.22 to 0.37 mm.

4. The metal can body according to any one of claims 1 to 3, **characterized in that** the central plate (61) shows a sag, which corresponds to the distance between two parallel planes passing through its edge (611) and its centre (612), respectively, wherein said sag has a value lower than or equal to 1 mm.

5. The metal can body according to any one of claims 1 to 4, **characterized in that** said at least one moulding (621, 622) has a depth F from 0.5 to 3 mm, preferably from 0.7 to 1.4 mm.

6. The metal can body according to any one of claims 1 to 5, **characterized in that** the lateral wall (5) has a diameter Db higher than 80 mm, preferably comprised between 80 and 85 mm.

7. The metal can body according to claim 6, **characterized in that**:

   - the lateral wall (5) has a diameter Db of 83 mm,
   - the central plate (61) has a diameter Dp comprised between 34 and 35 mm, and
   - the base line (632) of the peripheral groove (63) is inscribed into a circle having a diameter Df comprised between 78 and 79 mm.

8. The metal can body according to any one of claims 1 to 7, **characterized in that** the annular peripheral strip (62) includes two annular mouldings (621, 622).

9. The metal can body according to any one of claims 1 to 7, **characterized in that** the annular peripheral strip (62) includes:

   - an annular moulding (621), that surrounds the central plate (61), and
   - an intermediate crown (64), arranged between said annular moulding (621) and the peripheral groove (63).

10. A two-piece can, intended to receive a food product sterilized by heat treatment after closure of said can, which can (1) comprise:

    - a can body (2) according to any one of claims 1 to 9, and
    - a lid (3) assembled to the lateral wall (5) of said can body (2) to close the latter.

11. A method for producing a can body (2) according to any one of claims 1 to 9, **characterized in that** it is obtained by a Draw and Wall Ironing (DWI) technique.

12. A method for packaging and sterilizing a food product inside a two-piece can (1), wherein said method is **characterized in that** it comprises:

    - a step of providing a can body (2) according to any one of claims 1 to 9,
    - a step of filling said can body (2),
    - a step of closing said can body (2) with a lid (3), for producing a two-piece can (1), and
    - a step of sterilizing by heat treatment said food product added into said can body (2).

**Fig.1**

**Fig.2**

# Fig.3

# Fig.4

**EP 3 595 981 B1**

## RÉFÉRENCES CITÉES DANS LA DESCRIPTION

**Documents brevets cités dans la description**

- EP 0425124 A